# EUROPEAN PATENT APPLICATION

(11) **EP 2 661 144 A2**
(43) Date of publication of application: **06.11.2013**
(21) Application number: 13166452.6
(22) Date of filing: 03.05.2013
(51) Int. Cl.: H04W 76/02, H04W 84/18

(54) **Method and system for managing module identification information, and device supporting the same**

(30) Priority: 03.05.2012 KR 20120046669
(71) Applicant: Samsung Electronics Co., Ltd, Gyeonggi-do 443-742 (KR)
(72) Inventor: Chai, Jungwook, 443-742 Gyeonggi-do (KR); Lee, Minhee, 443-742 Gyeonggi-do (KR)
(74) Representative: Nederlandsch Octrooibureau

(57) **Abstract**

The present invention relates to management of module identification information and discloses a system and method therefor and a device supporting the same. In the system for managing module identification information, a source device broadcasts a signal for connection establishment, and at least one display device outputs module identification information for identifying itself on a display unit in response to the signal from the source device.

## Description

### BACKGROUND OF THE INVENTION

### 1. Field of the Invention:

The present invention relates to management of module identification information of devices. More particularly, the present invention relates to a method and system for managing module identification information that enable module information of sink devices receiving a signal from a source device to be directly identified so that a sink device to be connected to the source device can be easily found or easily connected to the source device, and to a device supporting the same.

### 2. Description of the Related Art:

Mobile devices, which support specific user functions and are small enough to be portable, are widely used in business and daily life. Recently introduced mobile devices support various user functions in an integrated fashion. Such mobile devices may provide a screen corresponding to a user function on a display unit. Hence, the user may enjoy content through the screen while executing a desired user function.

A mobile device may establish a communication channel to a sink device and may send various content or information to the sink device through the communication channel. In such case, the mobile device acts as a source device. To achieve this, the mobile device locates sink devices and performs a procedure for establishing a communication channel to one of the located sink devices. However, in the event that multiple sink devices are found, the user of the source device may have difficulty in identifying a most desirable sink device for communication from among the found sink devices. More particularly, when identification information of found sink devices displayed on the source device is unfamiliar to the user or contains numerals that are not readily comprehensible, the problem worsens.

Therefore, a need exists to develop a system and method that enables the user to readily identify a desirable sink device to be connected with the source device during the process of linking the source device with one or more sink devices.

The above information is presented as background information only to assist with an understanding of the present disclosure. No determination has been made, and no assertion is made, as to whether any of the above might be applicable as prior art with regard to the present invention.

### SUMMARY OF THE INVENTION

An object of the present invention is to address at least the above-mentioned problems and/or disadvantages and to provide at least the advantages described below. A further object of the present invention is to provide a device for managing module identification information that makes identification information of display devices more readily and directly comprehensible to thereby provide effective communication services.

In accordance with a first aspect of the present invention at least one of the above objects is achieved in a device for operating module identification information. The device comprises
a short-range wireless communication module arranged to receive a signal for connection establishment; and
a display unit arranged to output module identification information for identifying itself in response to the signal.
In accordance with a second aspect of the present invention, at least one of the above objects is achieved in a device for operating module identification information.The device comprises:
a display unit arranged to output module identification information for identifying at least one display device;
a control unit arranged to extract of the module identification information; and
a short-range wireless communication module arranged to perform a communication channel with the display device.

Further advantageous embodiments are defined in the dependent claims.

According to the present invention described above, the method and system for managing module identification information and a device supporting the same can make identification information of multiple display devices more readily and directly comprehensible.

Hence, the present invention enables more rapid and accurate linkage between source and display devices and supports easy communication connection therebetween according to design.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a simplified exterior view of a sink device according to an exemplary embodiment of the present invention;

FIG. 2 is a block diagram of the sink device shown in FIG. 1 according to an exemplary embodiment of the present invention;

FIG. 3 illustrates a configuration of a system for managing module identification information according to an exemplary embodiment of the present invention;

FIG. 4 is a block diagram of the source device shown in FIG. 3 according to an exemplary embodiment of the present invention;

FIG. 5 is a sequence diagram of a method for managing module identification information according to a first exemplary embodiment of the present invention;

FIG. 6 is a sequence diagram of a method for managing module identification information according to a second exemplary embodiment of the present invention;

FIG. 7 illustrates a screen interface supporting management of module identification information according to the second exemplary embodiment of the present invention; and

FIG. 8 is a sequence diagram of a method for managing module identification information according to a third exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the drawings, some elements are exaggerated, omitted or only outlined in brief, and thus may be not drawn to scale. Hence, the present invention is not limited by relative sizes of objects and intervals between objects in the drawings.

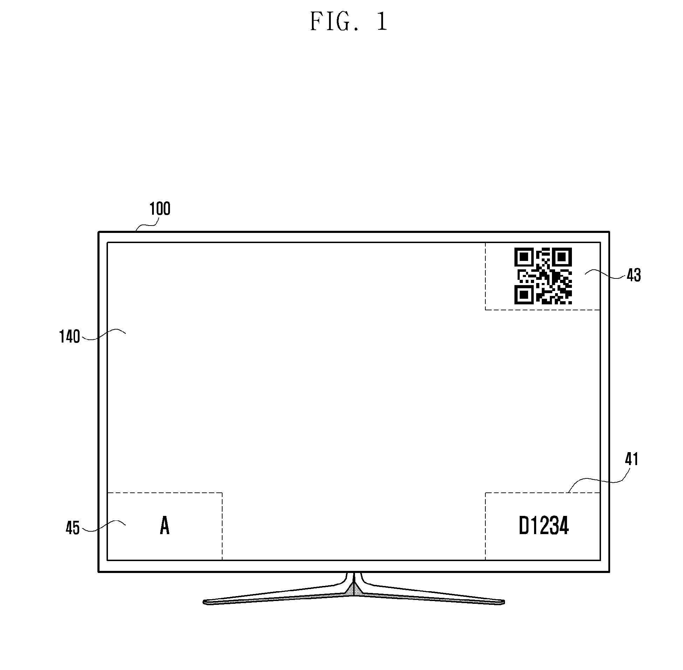

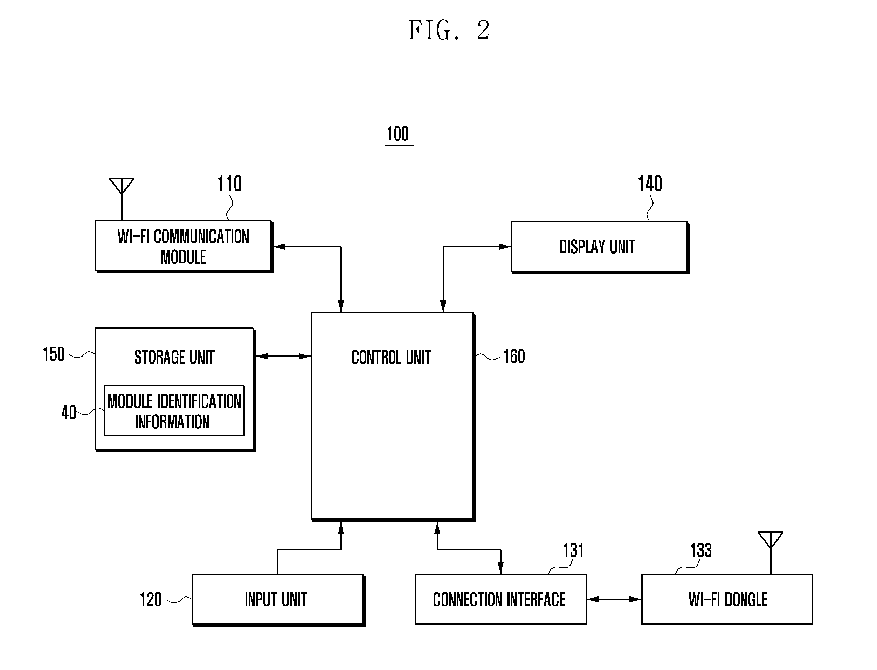

FIG. 1 is a simplified exterior view of a sink device according to an exemplary embodiment of the present invention, and FIG. 2 is a block diagram of the sink device shown in FIG. 1 according to an exemplary embodiment of the present invention.

Referring to FIG. 1 and FIG. 2, a sink device 100 of the present invention may include a Wi-Fi communication module 110, an input unit 120, a display unit 140, a storage unit 150, and a control unit 160. In the event that the sink device 100 is designed such that the Wi-Fi communication module 110 is not embedded therein (i.e., the Wi-Fi communication module 110 is not present in the sink device 100), the sink device 100 may further include a connection interface 131 and a Wi-Fi dongle 133. The connection interface 131 may further include a High Definition Multimedia Interface (HDMI) interface and a cable, and may be configured to act as a path physically linking the control unit 160 and the Wi-Fi dongle 133. The Wi-Fi dongle 133 supports Wi-Fi communication of the sink device 100 and may perform essentially the same operation as the Wi-Fi communication module 110.

The sink device 100 having the above configuration may output module identification information identifying itself on the display unit 140 in response to a request from the source device or user manipulation. In particular, the sink device 100 may output identification information 41 assigned to the Wi-Fi communication module 110 (for example, at least one of a Media Access Control (MAC) address and Service Set Identifier (SSID) on the display unit 140 as module identification information. The sink device 100 may also output unique code information such as a Quick Response (QR) code 43 assigned at the time of manufacture on the display unit 140. The sink device 100 may also receive designation information from a source device, to which the sink device 100 wishes to connect, and may output the designation information 45 on the display unit 140. Hence, the user may be readily and directly aware of identification information provided by the sink device 100, and may attempt to conduct connection establishment or may easily perform other tasks on the basis of the identification information.

The Wi-Fi communication module 110 may establish a communication channel to a source device and may receive content such as still images, moving images and text data from the source device. The Wi-Fi communication module 110 may send a response signal in reply to a probe signal sent by the source device, and may send module identification information such as a MAC address or SSID to the source device. Thereafter, the Wi-Fi communication module 110 may receive a connection request from the source device and may establish a communication channel to a Wi-Fi communication module of the source device according to preset schedule information or user manipulation. In exemplary embodiments, the source device and the sink device 100 may optionally exchange information needed to establish a communication channel through a wireless access point. In this case, the Wi-Fi communication module 110 may receive a probe signal sent by the source device through a wireless access point, and may send a corresponding response signal to the source device through the wireless access point. In addition, the Wi-Fi communication module 110 may receive designation information corresponding to module identification information thereof from the source device, and may forward the received designation information to the control unit 160, which may then display the designation information 45 at a portion of the display unit 140.

The input unit 120 is configured to generate input signals for operation of the sink device 100. The input unit 120 may be composed of key buttons, side keys and home keys arranged at various portions (e.g., a bezel, a front surface, a back surface, and the like) of the sink device 100. The input unit 120 may be realized using various mechanisms including a touch map, a touch panel, and the like, according to the design of the sink device 100. According to user control, the input unit 120 may generate input signals for controlling the sink device 100, such as signals to turn the TV on/off, to control TV channel selection and to control image output request. The input unit 120 may generate an input signal for outputting information stored or received from the outside according to characteristics of the sink device 100, an input signal for searching for or playing back a specific file according to its presence in the sink device 100, and an input signal for controlling a mobile communication function. More particularly, the input unit 120 may generate an input signal for outputting module identification information, and an input signal for accepting a connection request from the source device. The generated input signal may be sent to the control unit 160 and may be used as a command for executing a corresponding function.

The display unit 140 is configured to output various screens necessary for operation of the sink device 100. For example, the display unit 140 may output various screens for broadcast reception, for file search, for file playback, and for communication service reception. In exemplary embodiments, the display unit 140 may output module identification information identifying the Wi-Fi communication module 110 or the sink device 100 at a portion of the screen in response to an input signal from the input unit 120 or a probe signal from the source device. As described above, the module identification information may include at least one 41 of a MAC address and an SSID assigned to the Wi-Fi communication module 110, may include unique 2D or 3D barcode information 43 assigned to the Wi-Fi communication module 110 or the sink device 100, may include designation information 45 assigned by a source device making a connection request, and may include SSID information. The code information is information that may uniquely identify the sink device 100 or the Wi-Fi communication module 110 thereof, and that may be composed of at least one of a numeral, an image and a character.

The display unit 140 may display module identification information as an overlay on a screen of a function being currently executed by the sink device 100 or display the same on a preset background screen. For example, when a broadcast reception function is executed by the sink device 100 and a corresponding broadcast reception screen is displayed on the display unit 140, module identification information may be displayed at, for example, a corner portion, edge portion or central portion on the broadcast reception screen. In exemplary embodiments, the module identification information may be translucently displayed so that the broadcast reception screen is viewable. The module identification information may be displayed for a preset duration, and may be automatically removed from the display unit 140 after such duration.

To output module identification information on a preset background screen, the sink device 100 may transition to a Wi-Fi communication mode, may output a background screen assigned to the Wi-Fi communication mode on the display unit 140, and may output the module identification information on the background screen. For example, the display unit 140 may output a black background screen and may output module identification information on the black background screen in a distinguishable color and shape. The display unit 140 may display module identification information for a preset time interval, and may output a screen associated with the previously executed function when a signal for a separate activity, such as device linkage, is not generated within the preset time interval.

The storage unit 150 may store various programs necessary for one or more operations of the sink device 100, such as an operating system for operating the sink device 100, a broadcast reception program for broadcast reception, a mobile communication support program for supporting mobile communication, and a projector output support program. More particularly, the storage unit 150 may store module identification information 40 to support sink device identification in exemplary embodiments of the present invention.

The module identification information 40 may be at least one of MAC address information and SSID information corresponding to hardware information of the Wi-Fi communication module 110, or may be unique code information corresponding to at least one of the MAC address information and SSID information. The code information may be QR code information, as described herein, and may be in a form of a two-dimensional (2D) or a three-dimensional (3D) code. When designation information is received from a source device, the designation information may be temporarily stored in the storage unit 150. The storage unit 150 may store multiple pieces of designation information for individual source devices as a table. Later, when a connection request is received from a source device, the stored multiple pieces of designation information in the storage unit 150 may be used to output designation information corresponding to the source device although designation information is not received from the source device.

The control unit 160 controls supply and distribution of power necessary for operation of the sink device 100 and controls signal delivery and processing therefor. For example, to support broadcast reception, the control unit 160 may control an operation to connect to a broadcast server, to receive a broadcast signal therefrom, to decode the received broadcast signal, and to output the decoded broadcast signal. To support mobile communication, the control unit 160 may control an operation to supply power to a mobile communication module, to camp on a cell, and to receive a call request signal from an external device or send a call request signal to a given external device in response to user input. To support information output to the outside, the control unit 160 may control an operation to read content received from an external entity or that is stored in the storage unit 150, and output the read content to the outside after content size adjustment according to output settings, or without content size adjustment. In exemplary embodiments, the control unit 160 may apply automatic focusing to adjust the focus of the output image.

More particularly, when an output request for module identification information is received from the input unit 120 or a source device, the control unit 160 may read module identification information 40 stored in the storage unit 150 and may output the module identification information 40 at a portion of the display unit 140. In exemplary embodiments, instead of reading the stored module identification information 40, the control unit 160 may directly obtain module identification information from the Wi-Fi communication module 110, and may output the obtained module identification information on the display unit 140. Alternatively, in response to an output request for module identification information, the control unit 160 may control an operation to output specific code information stored in the storage unit 150 at a region of the display unit 140.

The control unit 160 may control an operation to output the module identification information 40, such as code information, for a preset duration. The control unit 160 may control an operation to display code information on a screen of the currently executed function or to display code information on a preset background screen.

When designation information is received as module identification information from a source device desiring Wi-Fi linkage, the control unit 160 may control an operation to temporarily or semi-permanently store the received designation information. The control unit 160 may control an operation to display the designation information on the display unit 140 for a preset duration and remove the designation information from the display unit 140 after that duration.

When a connection request is received from the source device, the control unit 160 may control signal exchange for connection establishment with the source device in a predefined manner. The control unit 160 may control an operation to receive content, such as images and text, from the source device, and may control an operation to store, to forward or to output the received content according to preset scheduling information or a user request.

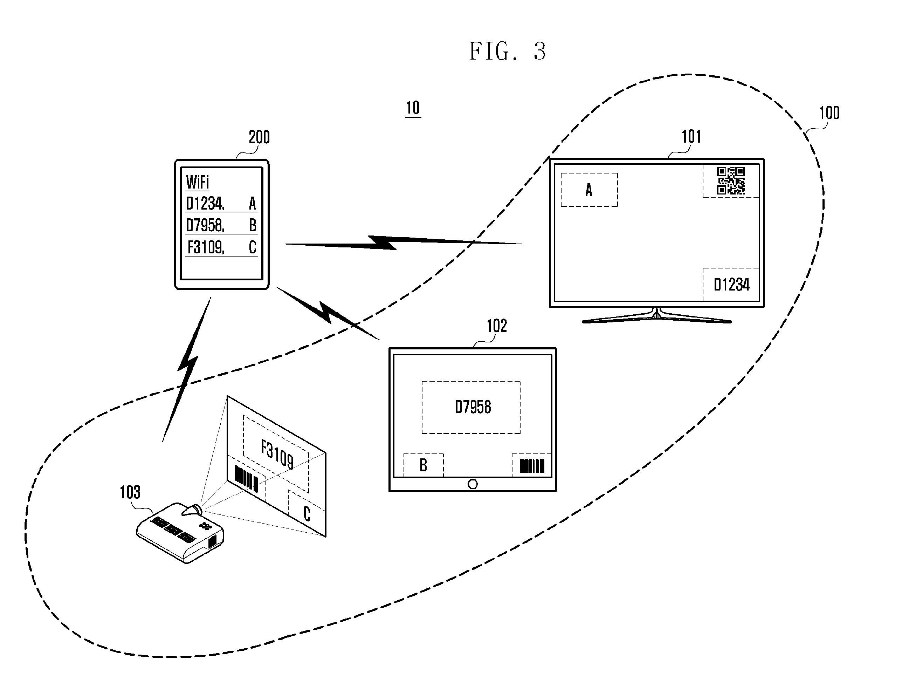

FIG. 3 illustrates a configuration of a system for managing module identification information according to an exemplary embodiment of the present invention.

Referring to FIG. 3, the system 10 for managing module identification information of the present invention may include a source device 200 and one or more sink devices 100.

In the system 10 for managing module identification information having the above configuration, sink devices 101, 102 and 103, having received an extended probe signal from the source device 200 output module may display identification information thereof on their display units, thereby enabling the user of the source device 200 to easily identify a specific sink device to be connected with the source device 200. In exemplary embodiments, as described herein, according to device design, each sink device 101, 102 or 103 may output at least one of an MAC address or an SSID assigned as identification information to the Wi-Fi communication module, may output pre-stored code information, or may output designation information specified by the source device 200.

To achieve this, in response to an input signal for Wi-Fi linkage, the source device 200 sends a preset extended probe signal to sink devices 101, 102 and 103. The source device 200 receives corresponding response signals from the sink devices 101, 102 and 103. The source device 200 extracts module identification information from the received response signals, and outputs a list of module identification information on the display unit. The user may be aware of connectable sink devices 101, 102 and 103 on the basis of the list of module identification information displayed on the display unit of the source device 200, and may easily identify a sink device 101, 102 or 103 corresponding to a given entry of the list on the basis of module identification information displayed on the display unit of each sink device 101, 102 or 103. Thereafter, when the user of the source device 200 selects an entry of the module identification information list corresponding to a desired sink device, the source device 200 may send a connection request to the corresponding sink device and transmit specific content thereto according to user input or setting information.

In addition, when the source device 200 extracts module identification information from a response signal sent by each sink device 101, 102 or 103, it may replace the extracted module identification information with designation information in a form of an index value and may send the designation information to the sink device 101, 102 or 103. Hence, the user of the source device 200 may easily identify correspondence between the sink devices 101, 102 and 103 and pieces of designation information on the basis of the displayed list of module identification information and module identification information displayed on the display unit of each sink device 101, 102 or 103.

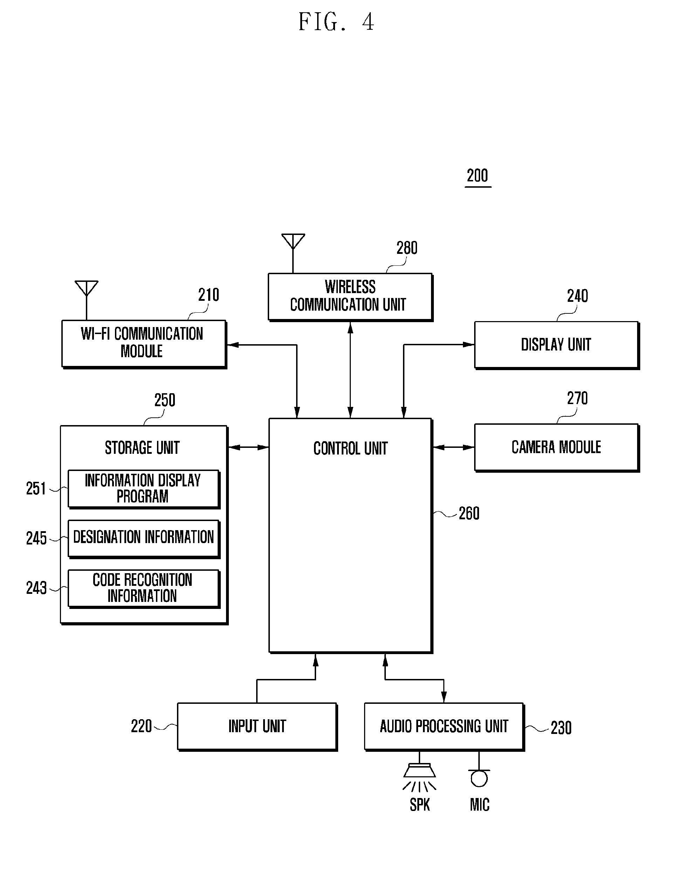

Internal components of the source device 200, and operations thereof, are described in more detail with reference to FIG. 4.

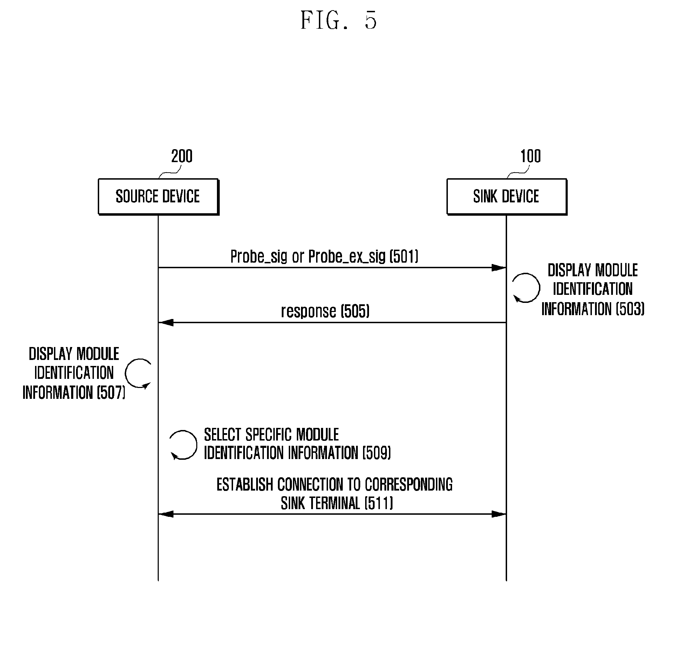

Such a sink device 100 may be one of various types of devices having a Wi-Fi communication module and which are capable of connecting to the source device 200. For example, a first sink device 101 may be a device supporting broadcast reception, a second sink device 102 may be a device supporting mobile communication and file search and editing, and a third sink device 103 may be a device outputting received or stored information. The sink device 100 may be a device supporting various functions, such as server access, housekeeping, and audio or video file playback. That is, the sink device 100 may be an electronic device that includes a communication module compatible with the source device 200 for communication and a display unit for displaying its module identification information. Each of the sink devices 101, 102 and 103 may include at least some components necessary to display module identification information, such as a communication module having assigned module identification information, a display unit to display module identification information, and a control unit to control the same, from among the components described in FIG. 2. The display of module identification information performed by the sink device 100 is described in more detail with reference to FIGs. 5 to 7.

FIG. 4 is a block diagram of the source device shown in FIG. 3 according to an exemplary embodiment of the present invention.

Referring to FIG. 4, the source device 200 of the present invention may include a Wi-Fi communication module 210, an input unit 220, an audio processing unit 230, a display unit 240, a storage unit 250, a camera module 270, a wireless communication unit 280, and a control unit 260.

The source device 200 having the above configuration may communicate with sink devices 101, 102 and 103 through the Wi-Fi communication module 210, receive module identification information respectively from the sink devices 101, 102 and 103, and provide a list of module identification information. In exemplary embodiments, for each sink device 101, 102 or 103, the source device 200 may replace module identification information with predefined designation information and send the designation information to the sink device 101, 102 or 103. In addition, the source device 200 may recognize module identification information of a sink device 101, 102 or 103 by capturing images of the display unit of the sink device 101, 102 or 103 on which module identification information is output, and control communication linkage according to the recognized module identification information.

The wireless communication unit 280 is configured to support separate communication for the source device 200, and may be a mobile communication module. For example, the wireless communication unit 280 may include a communication module that is capable of receiving various messages, such as text messages, instant messages and multimedia messages through a base station from an external device. The wireless communication unit 280 may receive a call connection request message from an external device via a base station. To achieve this, the wireless communication unit 280 may include a communication module supporting 2G, 3G, 4G or 5G mobile communication based on Time Division Multiple access (TDMA), Code Division Multiple access (CDMA), Wideband Code Division Multiple Access (WCDMA), Frequency Division Multiple access (FDMA) or Orthogonal Frequency Division Multiple Access (OFDMA) technology, a communication module based on a wired and/or wireless network, or any other communication module capable of supporting communication functionality of the source device 200. In the event that the source device 200 does not support separate communication other than Wi-Fi communication, the wireless communication unit 280 may be excluded from the source device 200.

The input unit 220 is configured to generate various input signals for manipulation of the source device 200. The input unit 220 may include specific keys, such as a button key, a side key and a home key, or may be realized using a touch map to support a full touchscreen capability. In exemplary embodiments, the touch map may be displayed on the display unit 240 so as to generate an input signal corresponding to user touch. More particularly, the input unit 220 may generate an input signal for sending a probe signal or extended probe signal through the Wi-Fi communication module 210 to sink devices 101, 102 and 103, an input signal for selecting specific module identification information from a displayed list of module identification information of sink devices 101, 102 and 103, and an input signal for selecting specific designation information from a displayed list of designation information assigned to sink devices 101, 102 and 103. The input unit 220 may also generate an input signal for controlling the camera module 270, an input signal for selecting a desired code information image through recognition of the captured images, and an input signal for establishing a connection with a sink device owning code information corresponding to a selected code information image.

The audio processing unit 230 may include a speaker to output audio signals generated by operation of the source device 200 and a microphone to collect audio signals. The audio processing unit 230 may generate a sound notification for outputting a list of searched sink devices 101, 102 and 103, a sound notification for outputting a list of designation information, a sound notification for connection establishment with a sink device associated with a selected item, a sound notification for content transmission, and a sound notification for connection release. Output of sound notification may be skipped according to user settings or design options.

The display unit 240 provides various screen interfaces needed for operation of the source device 200. To support touch functionality, the display unit 240 may be configured to include a touch panel and a display panel. More particularly, the display unit 240 may output a screen interface for activation of the Wi-Fi communication module 210, a screen interface for providing a list of sink devices 101, 102 and 103 created using received response signals, a screen interface for providing a list of designation information assigned to the sink devices 101, 102 and 103, and a screen interface for establishing a communication connection to a selected sink device. The display unit 140 may also output a captured image or a module identification information image displayed by a sink device 100 according to activation of the camera module 270, a selection screen for selecting specific module identification information obtained through recognition of captured module identification information, and a screen interface for establishing a communication connection to a sink device associated with the selected module identification information.

In exemplary embodiments, the captured image for recognition of module identification information may be divided into multiple sections, each of which is used to contain a piece of module identification information. For user selection, the selection screen may contain selectable images associated with recognized module identification information, or module identification information images in a selectable form. When the user enters a touch to select an image or a module identification information image, the source device 200 may automatically establish a connection with a sink device corresponding to the selected image. When the camera module 270 is used to establish a connection with a sink device, the screen on the display unit 240 may include at least one of screen images of the first sink device 101, second sink device 102 and third sink device 103 shown in FIG. 3. The control unit 260 may apply image recognition to captured images to recognize code information in particular as part of sink device identification, and control an operation to output a link image for sink device connection on a captured preview image so that the link image overlaps the corresponding sink device in the preview image.

The storage unit 250 may store various application programs necessary to support operations and functions of the source device 200. For example, the storage unit 250 may store an operating system for operating the source device 200, an information display program 251 for displaying module identification information of the present invention, code recognition information 243 used to recognize codes displayed on sink devices 101, 102 and 103, and designation information 245 used to assign index values for facilitating recognition of module identification information.

The information display program 251 may be composed of control routines of the source device 200 needed to display module identification information of sink devices according to an exemplary embodiment of the present invention. For example, the information display program 251 may include a routine for activating the Wi-Fi communication module 210, a routine for broadcasting one of a probe signal and an extended probe signal to sink devices 101, 102 and 103, a routine for extracting module identification information from response signals received from the sink devices 101, 102 and 103, a routine for creating a list of module identification information, and a routine for outputting the list of module identification information. The information display program 251 may also include a routine for assigning index values to module identification information extracted from the response signals, a routine for creating a list of designation information, and a routine for sending designation information to the corresponding sink devices 101, 102 and 103. The information display program 251 may further include a routine for establishing, upon selection of an information item of the list, a Wi-Fi connection with a sink device associated with the selected information item.

In addition, the information display program 251 may include a routine for activating the camera module 270, a routine for recognizing module identification information such as code information to identify sink devices 101, 102 and 103 in a captured image or preview image, a routine for outputting a selectable image representing recognized information, and a routine for establishing, upon selection of an output image, a communication connection with a sink device corresponding to the selected image. In exemplary embodiments, to facilitate recognition of module identification information, the recognition routine may include a routine for dividing a captured image or preview image into sections in a matrix form using multiple lines, and a routine for performing information recognition on a section basis. According to the information recognized on a section basis, the image output routine may output an image on a particular section. Hence, the user may select a desired sink device by selecting an image or a section on which the image is placed.

The code recognition information 243 is used to support recognition of code information displayed on the display unit of the sink device 101, 102 or 103. For example, the code recognition information 243 may include information regarding an algorithm that recognizes 2D or 3D code information displayed on the display unit of the sink device 101, 102 or 103.

For more easy recognition of module identification information of sink devices, the designation information 245 may include index values corresponding respectively to pieces of module identification information of sink devices 101, 102 and 103 having sent a response signal. To this end, each index value may be composed of information that is more accurately recognizable than module identification information, such as a simple symbol, simple image, and simple character or numeral. For example, while module identification information may have five digits or more as a combination of numerals and characters, the designation information 245 may be composed of index values having a single-digit numeral or character such as 'A', 'B' or 'C'. Instead of a list of module identification information, a list of designation information 245 may be created, and entries of the designation information list may be delivered to the corresponding sink devices 101, 102 and 103.

The camera module 270 is configured to capture an image of a target object and forward the captured image to the control unit 260. An image captured by the camera module 270 may be presented as a preview image on the display unit 240, and may be recognized in real time under control of the control unit 260. The camera module 270 may be used to captures images of a region of the display unit of a sink device 101, 102 or 103 in which code information is displayed.

The control unit 260 is configured to perform signal distribution and processing needed by the source device 200 for managing module identification information according to an exemplary embodiment of the present invention. More particularly, in response to an event requesting Wi-Fi connection, the control unit 260 may control an operation to broadcast a probe signal, requesting sink devices to send a response, to sink devices 101, 102 and 103. When response signals are received from sink devices 101, 102 and 103, the control unit 260 may control an operation to extract module identification information of the sink devices 101, 102 and 103 from the received response signals, create a list of module identification information, and output the list on the display unit 240. On the other hand, in response to a user request, the control unit 260 may control an operation to generate an extended probe signal, requesting sink devices to display their own module identification information, and broadcast the extended probe signal to sink devices 101, 102 and 103. Similarly to the case of a probe signal, when response signals are received from sink devices 101, 102 and 103, the control unit 260 may control an operation to extract module identification information from the received response signals, create a list of module identification information, and may output the list on the display unit 240. Upon reception of the extended probe signal, each sink device 101, 102 or 103 may output module identification information thereof (information in a form of a combination of numerals and characters or predefined code information) at a portion of the display unit.

The control unit 260 may control an operation to create designation information by assigning preset index values to pieces of module identification information obtained from the sink devices 101, 102 and 103 according to user settings or design options, and output a list of designation information on the display unit 240. The control unit 260 may also control an operation to deliver the designation information to the corresponding sink devices 101, 102 and 103.

When the camera module 270 is activated to capture an image containing code information, the control unit 260 may recognize the code information using the code recognition information 243. The control unit 260 may identify the type of a sink device 100 corresponding to the recognized code information, and may output a selectable link image for connection establishment to the sink device 100 on the display unit 240. In exemplary embodiments, the control unit 260 outputs a link image in an overlapping manner on a preview image displayed by the display unit 240. That is, the user may select a link image arranged in an overlapping manner on a preview image captured by the camera module 270 to thereby initiate connection establishment to a sink device associated with the selected link image. The link image may be an image identical to code information output on the display unit of a sink device or be a preset image for initiating connection establishment to an associated sink device.

The control unit 260 may also control an operation to captures images of module identification information output on the display unit of a sink device 100, may recognize the captured images of module identification information through image recognition, and may automatically conduct connection establishment with the sink device 100 on the basis of the recognized module identification information. The module identification information output on the display unit of a sink device 100 may be at least one of a MAC address assigned to the Wi-Fi communication module, SSID assigned thereto, and code information. In exemplary embodiments, the code information may include address information used to connect to the sink device 100.

As described above, in the system 10 for managing module identification information according to an exemplary embodiment of the present invention, each sink device 100 is configured to output module identification information thereof on the display unit, and hence a source device 200 may easily identify sink devices 101, 102 and 103 and rapidly select a sink device for connection establishment.

FIG. 5 is a sequence diagram of a method for managing module identification information according to a first exemplary embodiment of the present invention.

Referring to FIG. 5, in the method for managing module identification information according to the first exemplary embodiment of the present invention, the source device 200 sends a probe signal (Probe_sig) or an extended probe signal (Probe_ex_sig) for Wi-Fi connection establishment to at least one sink device 100 in step 501. In exemplary embodiments, the probe signal is a predefined signal for Wi-Fi connection establishment, and a sink device 100 receiving a probe signal may send a response signal to the source device 200. The extended probe signal is a signal that requests a sink device 100 to send a response signal and to output module identification information of the sink device 100 on the display unit thereof. When a probe signal is received from the source device 200, the sink device 100 skips step 503 for displaying module identification information. When an extended probe signal is received from the source device 200, the sink device 100 outputs module identification information thereof on the display unit 240 in step 503.

The sink device 100 sends a response signal containing module identification information thereof to the source device 200 in step 505. Upon reception of a response signal containing module identification information from the sink device 100, the source device 200 outputs module identification information of the sink device 100 on the display unit 240 in step 507. In the event that multiple response signals are received from multiple sink devices and multiple pieces of module identification information are obtained, the source device 200 may create a list of multiple pieces of module identification information and output the list on the display unit 240.

When an input event for connection establishment with a specific sink device (e.g., an event for selecting specific module identification information) is generated in the source device 200 in step 509, the source device 200 establishes a communication connection to the corresponding sink device 100 through the Wi-Fi communication module in step 511. Thereafter, the source device 200 may transmit specific content to the sink device 100 according to preset scheduling information or user control.

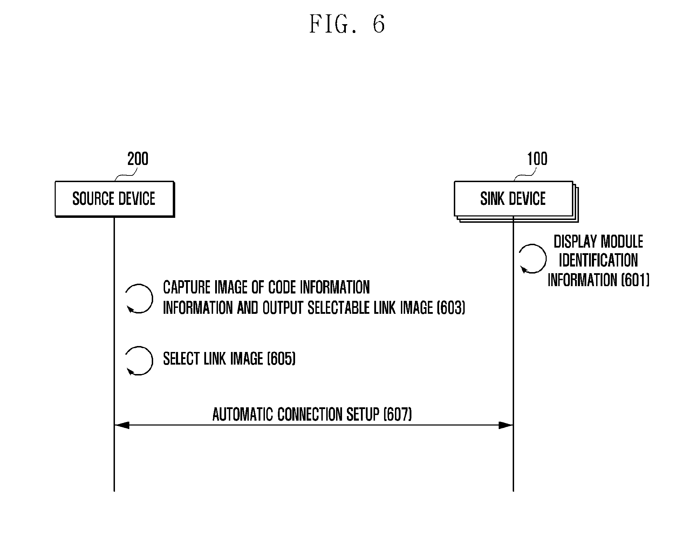

FIG. 6 is a sequence diagram of a method for managing module identification information according to a second exemplary embodiment of the present invention.

Referring to FIG. 6, in the method for managing module identification information according to the second exemplary embodiment of the present invention, at least one sink device 100 outputs module identification information thereof on the display unit 140 in step 601. In exemplary embodiments, the sink device 100 may have received an input signal for display of module identification information from the input unit 120, or from the outside. The sink device 100 may also output module identification information at a portion of the display unit 140 according to preset scheduling information after being powered on. More particularly, the sink device 100 may output module identification information containing code information. The sink device 100 may output module identification information on the display unit 140, at regular intervals after being powered on, or upon generation of an input signal requesting channel switching.

The source device 200 captures an image containing code information displayed by the sink device 100 and outputs a selectable link image in step 603. More specifically, the source device 200 may recognize code information by applying image recognition to a captured image of the display unit 140 of the sink device 100 displaying code information. On the basis of contents of the recognized code information, the source device 200 may output a link image associated with the sink device 100 for connection establishment on the display unit 240. In exemplary embodiments, the source device 200 may output the link image so that the link image overlaps code information within an image of the sink device 100 captured by the camera module 270. The link image may have the same form as the captured image of code information. When the source device 200 operates the camera module 270 to capture images of display units of multiple sink devices 100, multiple link images may be output in multiple regions for pieces of code information on the display unit 240. The code information of a sink device 100 may include address information of the Wi-Fi communication module thereof, where the address information is needed by the source device 200 for connection establishment with the sink device 100.

Thereafter, when an input signal for selecting a link image is generated (for example, detection of a touch event on a displayed link image on the display unit 240) in step 605, the source device 200 may initiate automatic connection establishment with a sink device 100 associated with the selected link image in step 607. In exemplary embodiments, the source device 200 may obtain information necessary for connection establishment with the sink device 100 from the code information, and exchange signals with the sink device 100 to establish a communication connection on the basis of the obtained information.

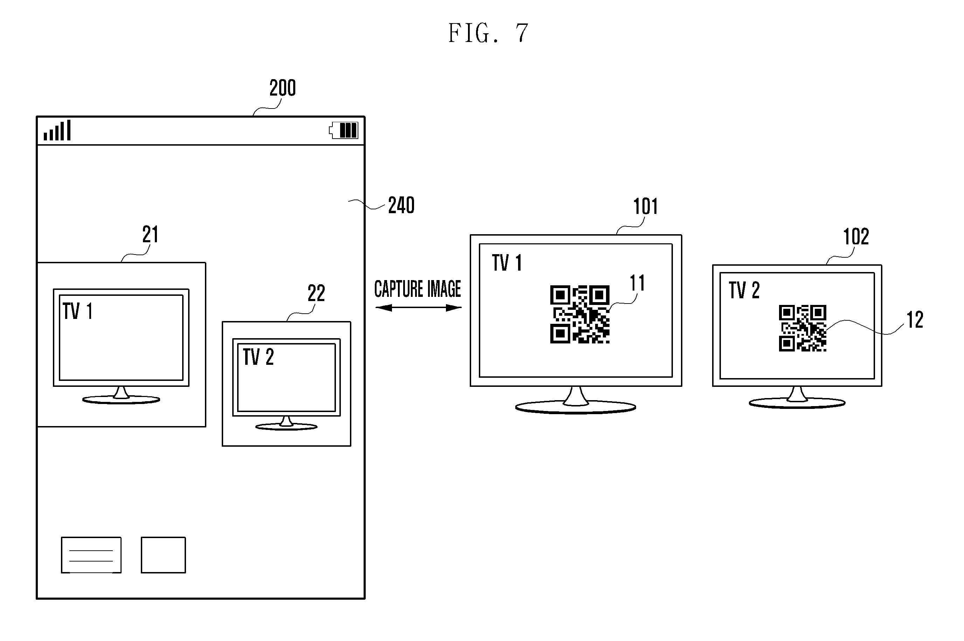

FIG. 7 illustrates a screen interface supporting management of module identification information according to the second exemplary embodiment of the present invention.

Referring to FIG. 7, when multiple sink devices 101 and 102 are present, the source device 200 may capture an image of all the sink devices 101 and 102, which output code information 11 and 12 as module identification information on their respective display units.

After the sink devices 101 and 102 are captured in a single image, the source device 200 may recognize code information 11 and 12 in the captured image through image recognition. On the basis of the recognized code information 11 and 12, the source device 200 may output link images 21 and 22, which enable the sink devices 101 and 102 to be respectively selected, on the screen. Hence, the user may select one of the link images 21 and 22 output on the display unit of the source device 200 to thereby initiate automatic connection establishment between the source device 200 and a sink device associated with the selected link image. In exemplary embodiments, the source device 200 may examine code information corresponding to the selected link image to obtain linkage information necessary for connection establishment with the sink device, and may perform connection establishment with the sink device using the obtained linkage information. For access to a sink device, the code information may include ID or address information of a communication module.

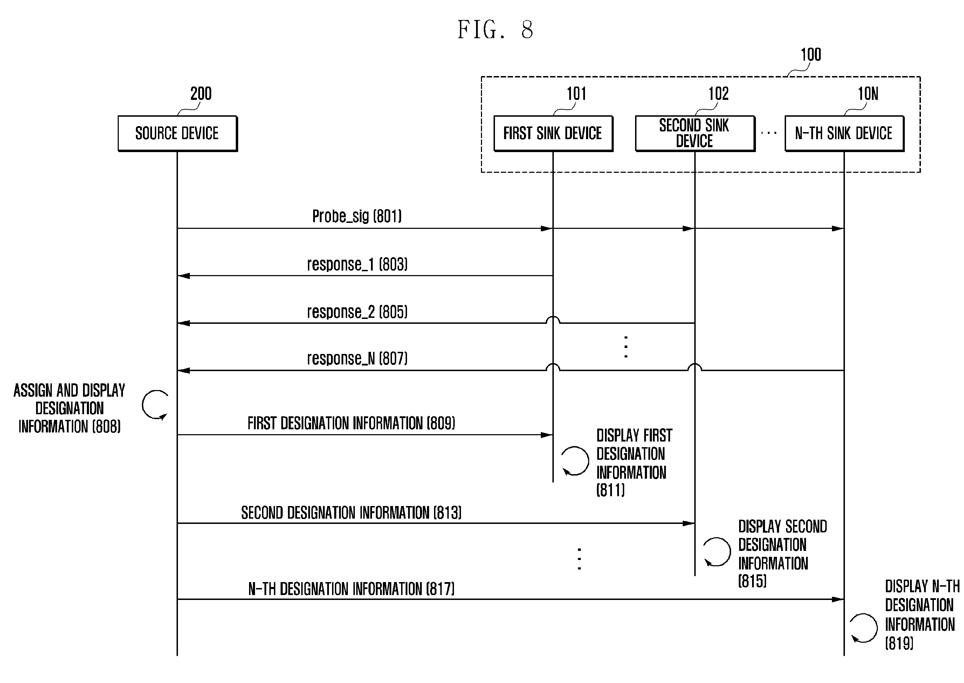

FIG. 8 is a sequence diagram of a method for managing module identification information according to a third exemplary embodiment of the present invention.

Referring to FIG. 8, in the method for managing module identification information according to the third exemplary embodiment of the present invention, the source device 200 broadcasts a probe signal (Probe_sig) to first to N-th sink devices 101, 102, ... 10N in step 801. Upon reception of a probe signal from the source device 200, each sink device may send a corresponding response signal to the source device 200. That is, the first sink device 101 sends a first response signal (response_1) to the source device 200 in step 803, the second sink device 102 sends a second response signal (response_2) to the source device 200 in step 805, and the N-th sink device 10N sends an N-th response signal (response_N) to the source device 200 in step 807.

The source device 200 assigns designation information using the received response signals and displays the designation information in step 808. More specifically, the source device 200 may extract module identification information from each response signal, and assign a preset index value as designation information to the extracted module identification information. The source device 200 may output a list of designation information on the display unit 240.

The source device 200 sends first designation information to the first sink device 101 in step 809, and the first sink device 101 displays the first designation information on the display unit in step 811. The source device 200 sends second designation information to the second sink device 102 in step 813, and the second sink device 102 displays the second designation information on the display unit in step 815. The source device 200 sends N-th designation information to the N-th sink device 10N in step 817, and the N-th sink device 10N displays the N-th designation information on the display unit in step 819.

Thereafter, the user of the source device 200 may examine designation information output on the display units of the sink devices 101, 102, ... 10N and a list of designation information displayed on the display unit of the source device 200 and issue a request for connection establishment by selecting specific designation information from the displayed list. Then, the source device 200 may perform connection establishment with a sink device corresponding to the selected designation information through the Wi-Fi communication module.

As described above, in the method for managing module identification information according to an exemplary embodiment of the present invention, sink devices may be controlled to output their module identification information so that a desired sink device can be identified for connection establishment, or sink devices may be controlled to output their code information so that a desired sink device can be identified and automatic connection establishment with the identified sink device can be initiated. Additionally, in the method for managing module identification information, for easier identification of sink devices, the sink devices may be controlled to receive and display more easily recognizable information.

Each of the source device and the sink device may further include various component modules according to model. That is, although not shown, each source or sink device may further include a short-range communication module for short-range communication, a data communication interface based on wired and wireless communication, an Internet communication module for Internet access and communication, and a digital broadcast receiving module for receiving and playing digital broadcasts. With the trend towards digital convergence, it should be apparent to those skilled in the art that each device may further include a unit comparable to the above-described units, and one unit of the device may be removed or replaced with another unit.

Each device of the present invention may be any information and communication appliance or multimedia appliance, such as a mobile communication device based on communication protocols supporting various communication systems, a Portable Multimedia Player (PMP), a digital broadcast receiver, a Personal Digital Assistant (PDA), a music player like an MP3 player, a portable game console, a smartphone, a laptop computer, or a handheld computer.

As an example, it is noted that the devices described herein may be terminals. As an example, it is noted that the sink device may be a display device. Other examples may be apparent to the skilled person in view of the present disclosure.

In an embodiment, a system includes at least one sink device for outputting module identification information containing code information in response to generation of an event, and a source device for photographing code information output on the at least one sink device, for recognizing the code information through image recognition, and for conducting automatic connection establishment with the sink device on the basis of the recognized code information.

In another embodiment, a device supporting management of module identification information is provided. The device includes a display unit for displaying, in response to an occurrence of a preset event, module identification information including at least one of Media Access Control (MAC) address information of a Wi-Fi communication module, predefined code information, Service Set Identifier (SSID) information, and designation information corresponding to a preset index value received from an external source device, a storage unit for storing the MAC address information and code information, and a control unit for controlling output of the module identification information.

In another embodiment, a method for managing module identification information is provided. The method includes receiving, by a sink device, a preset event, and outputting, upon reception of the preset event, by the sink device, at least one of MAC address information of a Wi-Fi communication module and SSID information.

In accordance with another embodiment, a method for managing module identification information is provided. The method includes outputting, by at least one sink device, pre-stored code information, photographing, by a source device, code information output on the at least one sink device, and recognizing, by the source device, the code information through image recognition, and conducting automatic connection establishment with the at least one sink device on the basis of the recognized code information.

In accordance with another embodiment, a method for managing module identification information is provided. The method includes receiving, by a source device, at least one of MAC address information and SSID information from at least one sink device, assigning, by the source device, a preset index value in accordance with the at least one of MAC address information and SSID information, and sending the index value as designation information to the sink device; and outputting, by the sink device, the received designation information.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A device for operating module identification information, the device comprising:
a short-range wireless communication module arranged to receive a signal for connection establishment; and
a display unit arranged to output module identification information for identifying itself in response to the signal.

2. The device of claim 1, wherein the short-range wireless communication unit is further arranged to transmit, in reply to the signal for connection establishment, a response signal containing module identification information corresponding to address information of the short-range wireless communication module.

3. The device of claim 1, wherein the display unit is further arranged to display at least one of Media Access Control (MAC) address information of the short-range wireless communication module and Service Set Identifier (SSID) information.

4. The device of claim 1, wherein the display unit is further arranged to display an unique code information corresponding to the module identification information.

5. The device of claim 4, wherein the unique code information comprises at least one of a 2D barcode, a 3D barcode, and a Quick Response code.

6. The device of claim 1, wherein the display unit is further arranged to display designation information sent by a source device transmitted the signal for connection establishment.

7. A device for operating module identification information, the device comprising:
a display unit arranged to output module identification information for identifying at least one display device;
a control unit arranged to extract the module identification information; and
a short-range wireless communication module arranged to perform a communication channel with the display device.

8. The device of claim 7, wherein the control unit is further arranged to control outputting a list of the extracted module identification information.

9. The device of claim 8, wherein the control unit is further arranged to perform, when specific module identification information is selected from the list of extracted module identification information, connection setup with the display device associated with the selected module identification information.

10. The device of claim 7, wherein the control unit is further arranged to assign a preset index value as designation information in accordance with the extracted module identification information.

11. The device of claim 10, wherein the control unit is further arranged to control to output a list of designation information and to send the designation information to a corresponding display device.

12. The device of claim 7, further comprising:
a camera module arranged to capture the module identification information displayed on the display device.

13. The device of claim 12, wherein the control unit is further arranged to recognize the module identification information through image recognition and conduct automatic connection establishment with the display device on the basis of the recognized module identification information.

14. The device of claim 12, wherein the module identification information comprise a code information and wherein the control unit is further arranged to output a link image corresponding to the code information recognized through image recognition in an overlapping manner on the captured image.

15. The device of claim 14, wherein the control unit is further arranged to conduct, when an input signal for selecting the link image is generated, automatic connection establishment with the display device corresponding to the selected link image.
